# EUROPÄISCHE PATENTSCHRIFT

(11) **EP 1 044 846 B1**
(45) Veröffentlichungstag und Bekanntmachung des Hinweises auf die Patenterteilung: **18.04.2007**
(21) Anmeldenummer: 00107433.5
(22) Anmeldetag: 06.04.2000
(51) Int. Cl.: B60P 7/08

(54) **Verankerung und Fahrzeug**
Tie down and vehicle
Dispositif d'amarrage et véhicule

(30) Priorität: 15.04.1999 US 292828
(43) Veröffentlichungstag der Anmeldung: 18.10.2000
(73) Patentinhaber: DEERE & COMPANY, Moline, Illinois 61265-8098 (US)
(72) Erfinder: Shambeau, Thomas Allen, Beaver Dam, WI 53916 (US); Hansen, Loren Fredrick, Lincoln, NE 68505 (US)
(74) Vertreter: Magin, Ludwig Bernhard

(56) Entgegenhaltungen:
- EP-A- 0 588 761
- US-A- 2 532 743
- US-A- 3 377 039
- US-A- 3 709 156
- US-A- 3 804 436
- US-A- 4 531 869
- US-A- 5 052 869

## Beschreibung

Die Erfindung betrifft eine Verankerung mit einem Basisteil und einem Befestigungsmittel, wobei der Basisteil eine Ausnehmung zur schwenkbaren Aufnahme des Befestigungsmittels und das Befestigungsmittel zumindest einen Sockelteil und ein Haltemittel aufweist, und der Basisteil mit einer wenigstens eine Aussparung aufweisenden Abdeckung verbunden ist und der Sockelteil und das Haltemittel derart dimensioniert sind, daß das Haltemittel nicht aber der Sockelteil durch die Aussparung hindurchtreten kann, sowie ein Fahrzeug mit einer derartigen Verankerung.

Um Fracht auf einer Ladefläche durch ein Festbinden zu sichern, werden häufig Gurte bzw. Riemen wie elastische oder längeneinstellbare Band- und Seilelemente verwendet. Oftmals ist es vorteilhaft, die Gurte an Verankerungen an oder in der Nähe der Ladefläche zu befestigen. Für solche Anwendungsfälle werden üblicherweise Verankerungen verwendet, die häufig einen D-förmigen, dreieckigen oder rechteckigen Ring aufweisen, der schwenkbar durch eine Basis aufgenommen wird. Die Basis wiederum ist an der Ladefläche mittels Schrauben oder Nieten befestigt. Eine solche Verankerung wird beispielsweise in der US-A-5,052,869 gezeigt.

Die US-4,531,869 zeigt eine Verankerung mit einem Befestigungsmittel mit einer zentrale Stange mit einem Paar beabstandeter, paralleler V-förmiger Schenkel, die sich von der zentralen Stange erstrecken. Die V-förmigen Schenkel weisen Arme auf, die sich von ihnen weg erstrecken. Unterhalb der Oberfläche eines Rahmens ist ein Gehäuse vorgesehen, welches die Arme so aufnimmt, dass das Befestigungsmittel von einer Ruhe- in eine Betriebsstellung verschwenkt werden kann.

Die US-A-3,709,156 offenbart eine Verankerung mit einem Befestigungsmittel mit einem sphärischen Teil, welches in einem Sockel angeordnet ist und das ein Gurthaltemittel aufweist, welches daran angepasst ist, durch einen Schlitz in einer Abdeckung austreten zu können, so dass es derart verschwenkt werden kann, dass es eine Mehrzahl von Stellungen einnehmen kann.

Die US-A-2,532,743 beschreibt eine Verankerung mit einem Basisteil und einem Befestigungsmittel, wobei der Basisteil eine Ausnehmung zur schwenkbaren Aufnahme des Befestigungsmittels und das Befestigungsmittel zumindest einen Sockelteil und ein Haltemittel aufweist, und der Basisteil mit einer wenigstens eine Aussparung aufweisenden Abdeckung verbunden ist und der Sockelteil und das Haltemittel derart dimensioniert sind, daß das Haltemittel nicht aber der Sockelteil durch die Aussparung hindurchtreten kann.

Die EP-A-0 588 761 zeigt eine Vorrichtung zur Sicherung von Ladegut an der Seitenwand eines Laderaumes, welche eine an der Seitenwand verankerte Zurrschiene mit paarweise einander gegenüberliegenden Längsrinnen aufweist. In diesen Längsrinnen lagern in Längsrichtung der Zurrschiene verschiebbare Zurrhaken, deren Lagerzapfen eine Drehachse bilden und um diese drehbar sind.

Das der Erfindung zugrunde liegende Problem wird darin gesehen, daß bekannte Verankerungen aufwendig in der Herstellung sind und mit solchen Verankerungen ausgestattete Fahrzeuge dadurch verteuert werden.

Dieses Problem wird erfindungsgemäß durch die Lehre der Patentansprüche 1 und 9 gelöst, wobei in den weiteren Patentansprüchen die Lösung in vorteilhafter Weise weiterentwickelnde Merkmale aufgeführt sind.

Auf diese Weise kann das Befestigungsmittel auf einfache Weise in dem Basisteil bzw. in einer Ausnehmung in dem Basisteil gehalten werden, ohne daß es hierzu an einem Boden des Basisteils oder an dem Basisteil selbst befestigt werden muß. Durch ein Verbinden des Basisteils mit der Abdeckung wird das Befestigungsmittel in dem Basisteil bzw. unterhalb der Abdeckung in der Ausnehmung gesichert, da der Sockelteil aufgrund seiner Dimensionierung nicht durch die Aussparung in der Abdeckung hindurchgelangen kann. Das Haltemittel hingegen kann sich durch die Aussparung erstrecken, da es schmäler ausgebildet ist als der Sockelteil bzw. die Aussparung. Aufgrund dieser Ausbildung kann das Befestigungsmittel bezogen auf den Basisteil bzw. die Abdeckung verschwenkt werden, ohne daß hierzu eine aufwendige Lagerung des Sockelteils notwendig ist. Das Haltemittel ist dabei vorzugsweise von einer solchen Größe bzw. Ausbildung, daß es vollständig durch die Aussparung in den Basisteil bzw. in die Ausnehmung in dem Basisteil hinein verschwenkt werden kann, so daß es nicht über die Abdeckung hinausragt. Es kann aber auch größer ausgebildet sein, so daß das Haltemittel vollständig oder bereichsweise über die Abdeckung übersteht. Die Abdeckung und das Basisteil können beispielsweise mittels Schrauben oder Nieten verbunden sein. Es ist aber auch ein Verschweißen, Löten, Verkleben oder Klemmen denkbar.

Ist das Haltemittel bzw. das Befestigungsmittel bezogen auf den Basisteil verdrehbar ausgebildet, so kann es in eine Mehrzahl verschiedener Stellungen gebracht werden, so daß eine Befestigung von Gurten, Seilen, Ketten oder Riemen beispielsweise zum Festzurren von Ladung an dem Befestigungsmittel in einfacher Weise möglich ist. Das Befestigungsmittel kann dabei je nach Bedarf in verschiedene Stellungen bzw. Höhen verschwenkt und auch verdreht werden, so daß die Gurte etc. befestigt werden können, ohne verdreht werden zu müssen. Da keine Befestigung des Befestigungsmittels direkt an dem Basisteil erfolgt, sondern es nur in diesem gehalten wird, kann dies in einfacher Weise dadurch erfolgen, daß die Aussparung und die Ausnehmung derart ausgebildet sind, daß sich der Sockelteil in der Aussparung und das Haltemittel in der Ausnehmung verdrehen kann. Vorzugsweise sind die Aussparung und die Ausnehmung kreisförmig bzw. wenigstens im wesentlichen kreisförmig ausgebildet, so daß einem Verhaken bzw. Verkanten entgegengewirkt wird.

Darüber hinaus kann vorgesehen sein, daß das Befestigungsmittel bezogen auf den Basisteil zumindest in einem vorgegebenen Bereich verschieblich angeordnet ist. Auf diese Weise kann eine zusätzliche Anpassung an die benötigte Befestigungsstellung erfolgen. Dies kann beispielsweise dadurch erzielt werden, daß zwischen dem Haltemittel und der Ausnehmung bzw. zwischen dem Sockelteil und der Ausnehmung ein gewisses Maß an Freiraum bzw. Spiel vorgesehen ist. Hierdurch können auch Fertigungsabweichungen ausgeglichen werden.

Vorzugsweise weist die Verankerung einen Anschlußflansch auf, der an dem Basisteil vorgesehen bzw. mit diesem verbunden sein kann. Dadurch kann eine einfache Verbindung des Basisteils mit der Abdeckung über den Abdeckflansch erfolgen, der eine verbreiterte Anschlußfläche, beispielsweise zur Aufnahme von Öffnungen für Befestigungsmitteln oder eine Klebefläche etc. zur Verfügung stellt.

Da über das Befestigungsmittel bzw. über den an der Abdeckung im Belastungsfall anliegenden Sockelteil relativ große Kräfte auf die Abdeckung aufgebracht werden können, kann zwischen der Abdeckung und dem Anschlußflansch eine Verstärkungsplatte vorgesehen sein, die vorzugsweise eine Aussparung aufweist, durch die der Sockelteil nicht aber das Haltemittel hindurchtreten kann, so daß der Sockelteil auf die Verstärkungsplatte und nicht oder nur bereichsweise auf die Abdeckung einwirkt und die eingeleiteten Kräfte bezogen auf die Abdeckung auf einen größeren Bereich verteilt werden.

Ist das Befestigungsmittel bzw. das Haltemittel zumindest bereichsweise in der Art einer Öse ausgebildet bzw. weist es wenigstens eine Aussparung oder einen Haken auf, so können Tragmittel wie Gurte, Seile, Riemen, Ketten oder auch starre Mittel wie Stangen in einfacher Weise befestigt werden.

Bei der Abdeckung kann es sich allgemein um eine Oberfläche eines Gegenstands handeln. Vorzugsweise entspricht die Abdeckung aber einer Ladefläche, beispielsweise der Ladefläche eines Transportbehälters, wie eines Containers, einer Gitterbox, einer Palette, eines Hubkastens, oder aber vorzugsweise der Ladefläche eines Transport- oder Nutzfahrzeugs. Es ist aber auch denkbar, daß die Abdeckung mit einer solchen direkt oder über weitere Bauteile indirekt verbindbar, beispielsweise anschraub- oder anderweitig befestigbar ist.

Besteht zumindest der Basisteil aus einem Kunststoff, vorzugsweise einem Kunststoffverbundmaterial, so ist er einfach und günstig in der Herstellung sowie witterungsbeständig. Darüber hinaus werden Geräusche, die durch eine Berührung des Befestigungsmittels mit dem Basisteil,die hauptsächlich auftreten, wenn sich das Befestigungsmittel in einer Aufbewahrungsstellung befindet, in der es an dem Basisteil anliegt, wenn eine Bewegung der Verankerung bzw. eines Fahrzeugs oder eines Gegenstandes, der mit solch einer Verankerung ausgestattet ist, beispielsweise über unebenes Gelände erfolgt.

In dem Basisteil kann wenigstens eine Abflußöffnung vorgesehen sein, die in einem Wandbereich angeordnet sein kann. Vorzugsweise ist sie aber in einem Mittenbereich eines Bodens des Basisteils vorgesehen. Über eine solche Abflußöffnung können Schmutz und Feuchtigkeit aus der Verankerung entweichen, so daß einem Verrotten entgegengewirkt wird

Werden Fahrzeuge mit einer Ladefläche mit solchen Verankerungen ausgestattet, so wird die Ladefläche nicht durch Befestigungsmittel beeinträchtigt, die auf dieser angeordnet sind. Auf diese Weise wird ein behinderungsfreies Verschieben von Ladung auf der Ladefläche ermöglicht. Darüber hinaus wird die Gefahr verringert, daß sich eine Bedienungsperson an überstehenden Befestigungsmitteln verletzt oder die Ladung bzw. Ladungsbestandteile durch diese beschädigt werden können. Darüber hinaus kann einer Geräuschentwicklung, insbesondere bei einem Einsatz auf unebenem Terrain, entgegengewirkt werden.

In der Zeichnung ist ein nachfolgend näher beschriebenes Ausführungsbeispiel der Erfindung dargestellt. Es zeigt:
- Fig. 1: ein Fahrzeug mit einer Ladefläche mit mehreren erfindungsgemäßen Verankerungen,
- Fig. 2: eine der Verankerungen in Explosionsdarstellung,
- Fig. 3: eine Ansicht der Verankerung von oben betrachtet, wobei eine Bedienungsperson an der Verankerung angreift und
- Fig. 4: eine Seitenansicht der Verankerung, wobei die Bedienungsperson ein Befestigungsmittel der Verankerung in eine hochgeklappte Stellung gebracht hat.

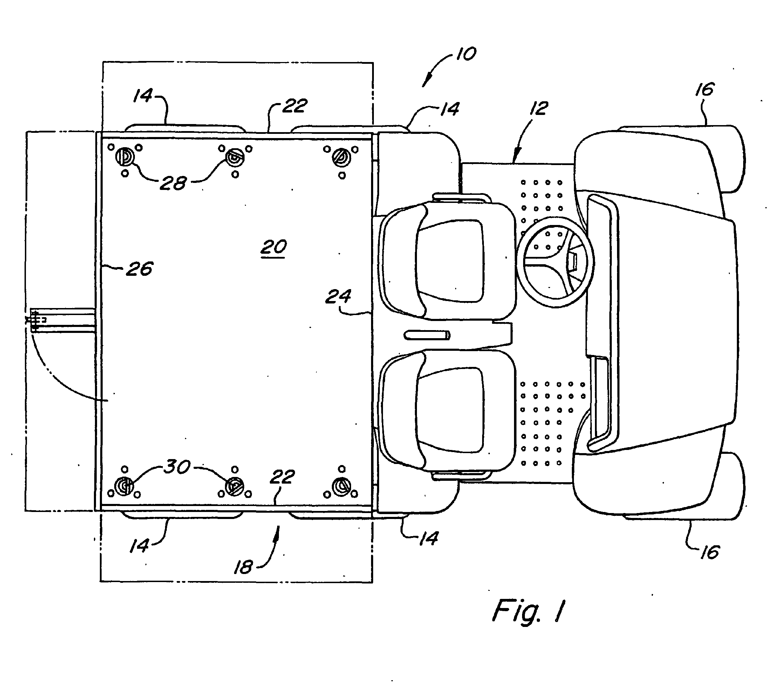

Figur 1 zeigt ein Nutzfahrzeug bzw. ein Fahrzeug 10 mit einem Rahmen 12, der durch vier antreibbare Räder 14 und ein Paar lenkbarer, vorderer Räder 16 getragen wird. Durch den Rahmen 12 wird ein Ladebehälter 18 an einer Stelle oberhalb der antreibbaren Räder 14 getragen. Der Ladebehälter 18 weist einen horizontalen Boden bzw. eine Ladefläche 20 und vertikale rechte und linke Seitenwände 22, eine Frontwand 24 und eine Ladeklappe 26 auf. Die Ladeklappe 26 bildet eine rückwärtige Wand des Ladebehälters 18 und ist derart angebracht, daß sie eine Öffnung, die durch die rückwärtigen Kanten der Ladefläche 20 und der Seitenwände 22 bestimmt wird, selektiv verschließt. Auch die Seitenwände 22 sind um horizontale Achsen schwenkbar angebracht. Auf diese Weise können die Seitenwände 22 und die Ladeklappe 26 aus einer geschlossenen, aufrechten Stellung in eine offene, zurückgelehnte Stellung gebracht werden, in der sie eine wirksame Erweiterung der Ladefläche 20 bilden können und wodurch der Ladebehälter 18 in eine flache Ladefläche (in unterbrochenen Linien dargestellt) umgewandelt werden kann. Die Ladefläche 20 ist mit beabstandeten Aussparungen 28 versehen, um eine Mehrzahl von Festbindeeinrichtungen bzw. Verankerungen 30 zu beherbergen.

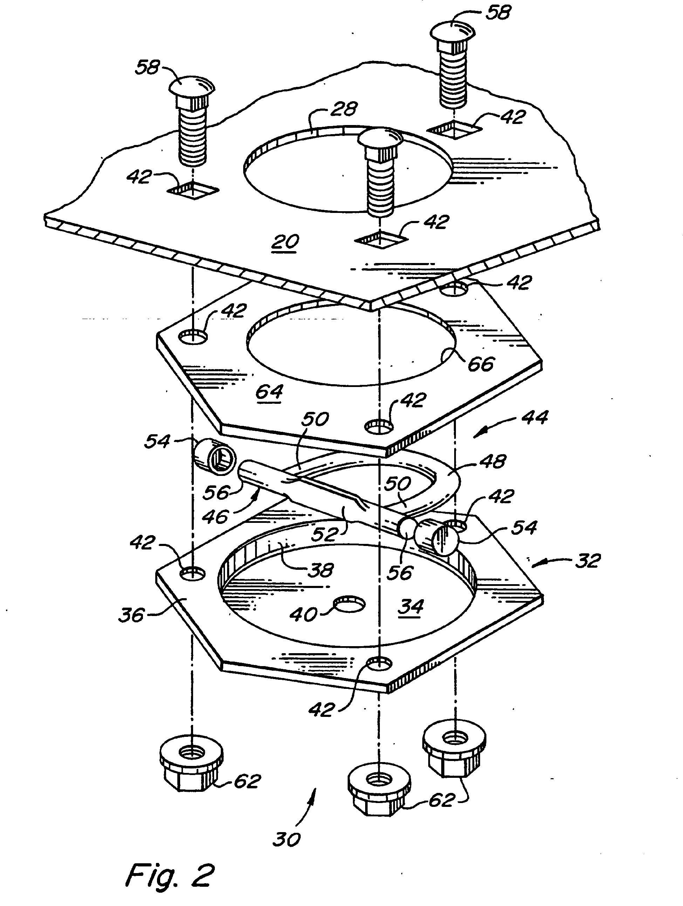

Eine Verankerung 30, die entsprechend der vorliegenden Erfindung ausgebildet ist, wird in Figur 2 in einer Explosionsdarstellung gezeigt. Die Verankerung 30 ist von einer Art, um Lasten durch Riemen an einer Trägerstruktur, wie einer Ladefläche 20, zu sichern. Fachleute werden jedoch sofort weitere Anwendungsfälle der vorliegenden Erfindung wahrnehmen.

Die Verankerung 30 der vorliegenden Erfindung weist ein Anschlußmittel bzw. einen Basisteil 32 mit einer flachen, im allgemeinen runden Basis bzw. einem Boden 34, einem Anschlußflansch 36 und einem Zwischenstück 38 auf, das den Boden 34 und den Anschlußflansch 36 verbindet. Eine Abflußöffnung 40 ist in dem Boden 34 vorgesehen, um Feuchtigkeit und Schmutz entweichen zu lassen, und es ist eine Mehrzahl von Öffnungen um die Peripherie des Anschlußflansches 36 verteilt, um Befestigungsmittel aufzunehmen. Vorzugsweise ist der Boden 34 als ein Teil aus einem Verbundmaterial wie aus Polyäthylen mit hohem Molekulargewicht geformt. Eine Herstellung des Basisteils 32 aus solch einem Verbundmaterial dient dazu, Lärm zu reduzieren und hilft auch dabei, das Basisteil 32 wetterfest auszubilden. '

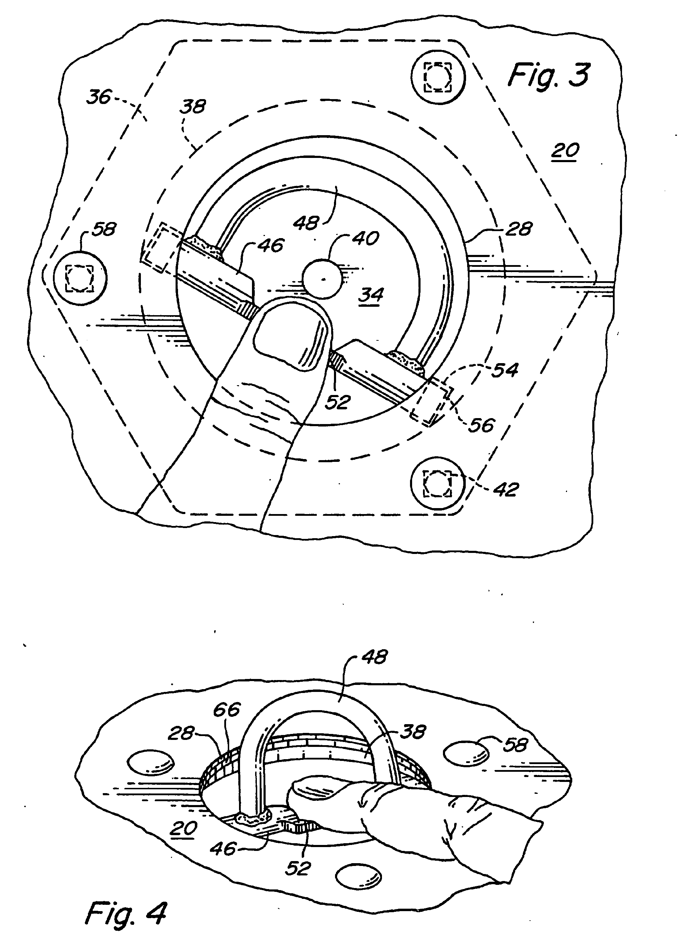

Ein Ring, der im folgenden als Befestigungsmittel 44 bezeichnet wird, wird in einem separaten Arbeitsgang in endloser Form hergestellt und weist einen im allgemeinen zylindrischen Sockelteil 46 und eine Erweiterung bzw. ein Haltemittel 48 auf. Das Haltemittel 48 kann eine im wesentlichen bogenförmige Gestalt annehmen, wie sie in Figur 4 gezeigt wird, wobei der resultierende Umfang des Befestigungsmittels 44 im allgemeinen D-förmig ist (obwohl der Sockelteil 46 länger ist, als ein gerades Stück eines D). Jedoch wird der Fachmann andere geometrische Formen des Umfangs des Befestigungsmittels 44 wahrnehmen, um eine Öffnung zur Verfügung zu stellen, durch die ein Riemen hindurchgeführt werden kann, so wie dreieckige oder rechteckige Formen, wie sie in bestimmten Strukturen des Standes der Technik verwendet wurden. Der Durchmesser jeder der Öffnungen 28 ist geringer als die Länge des Sockelteils 46, so daß, wenn der Basisteil 32 an der Ladefläche 20 gesichert ist, der Sockelteil 46 zwischen der Ladefläche 20 und dem Boden 34 eingeschlossen ist. Das Befestigungsmittel 44 ist vorzugsweise aus einem runden Werkstoff gefertigt, der für solche Anwendungsfälle paßt, wobei Enden 50 des Haltemittels 48 an dem Sockelteil 46 anliegen und mit diesem beispielsweise durch Schweißen verbunden sind; die Enden 50 sind im allgemeinen symmetrisch von einem Mittelpunkt der Länge des Sockelteils 46 beabstandet. Vorzugsweise wird der Sockelteil 46 während der Herstellung verformt, um einen abgeflachten Bereich 52 in seiner Mitte vorzusehen.

Da die Trägerstruktur, die in den Figuren 1 - 4 verwendet wird, um das Befestigungsmittel 44 zurückzuhalten und um Ladung zu halten, das Material der Ladefläche 20 ist, kann es wünschenswert oder nützlich sein, um die Wahrscheinlichkeit starker Belastungen zu reduzieren, eine Verstärkungsplatte 64 (in den Figuren 2 und 4 gezeigt) vorzusehen, die zwischen dem Anschlußflansch 36 und der Ladefläche 62 angeordnet ist. Die Verstärkungsplatte 64 weist eine zentrale Öffnung 66 und am Umfang angeordnete Aufnahmeöffnungen 42 auf. Die zentrale Öffnung 66 weist vorzugsweise im wesentlichen den gleichen Durchmesser, wie die Aussparung 28 in der Ladefläche 20 auf, so daß, wenn er belastet ist, der Sockelteil 46 des Befestigungsmittels 44 auf die Verstärkungsplatte 64 wirken wird, so daß Kraft über einen größeren Bereich auf die Ladefläche 20 übertragen wird.

Unter machen Umständen kann es wünschenswert sein, eine elastische Kappe 54 auf den Enden 56 des Sockelteils 46 anzuordnen, um Geräusche zu reduzieren, wenn das Fahrzeug 10 über unebenen Untergrund fährt. Dadurch, daß die Kappen 54 einen etwas größeren Durchmesser aufweisen, als die Distanz zwischen dem Boden 34 und der Unterseite der Ladefläche 20 (oder der Verstärkungsplatte 64, wenn eine solche benutzt wird), wenn die Verankerung 30 zusammengebaut ist, können die Kappen 54 derart ausgebildet sein, daß sie das Befestigungsmittel 44 bezogen auf den Boden 34 in jeder verschwenkten, gedrehten und seitlichen Stellung halten. Unter anderen Umständen (z.B. wenn die Bewegungsfreiheit des Befestigungsmittels 44 Priorität aufweist), können die Kappen 54 weggelassen werden.

Die Verankerung 30 kann an der Ladefläche über ein Befestigungsmittel oder über Befestigungsmittel, wie Nieten oder Schloßschrauben 58, gesichert werden. Die Schloßschrauben 58, werden von oberhalb der Ladefläche 20 eingesetzt und durch jede der Aufnahmeöffnungen 42 in der Ladefläche 20, der Verstärkungsplatte 64 (wenn verwendet) und dem Anschlußflansch 36, welche miteinander fluchten, wie es in Figur 2 gezeigt wird, hindurchgeführt. Gewinde der Schloßschrauben 58 können dann mit Sperrmuttern 62 zusammenwirken, um die Verankerung 30 an der Ladefläche 20 zu sichern. Auf diese Weise ragen nur abgerundete Köpfe der Schloßschrauben 58 über die Ladefläche 20 hinaus. Alternativ kann ein passender Anschluß an die Unterseite der Ladefläche 20 durch übliche Methoden ausgeführt werden, so daß keine mit der Verankerung 30 verbundene Struktur über die Ladefläche 20 hinausragen wird. Beispielsweise kann eine selbstsichernde Schraube vorgesehen sein, welche mit einer passenden zugehörigen Struktur zusammenwirken kann, welche an der Unterseite der Ladefläche 20 oder einer anderen Trägerstruktur vorgesehen sein kann. Wenn Schloßschrauben 58 verwendet werden, werden die Aufnahmeöffnungen 42 in der Ladefläche 20 vorzugsweise von quadratischer Ausbildung sein, um zu den quadratischen Schäften der Schloßschrauben 58 zu passen, um ein Anziehen der Muttern 62 auf den Schloßschrauben 58 zu vereinfachen.

Es wird nun auf Figur 3 Bezug genommen, in der eine Verankerung 30 gezeigt wird, bei der das Befestigungsmittel 44 in einer zurückgelehnten Aufbewahrungsstellung unterhalb der Ladefläche 20 angeordnet ist. Das Befestigungsmittel 44 ist schwenkbar, indem der Daumen oder Finger einer Bedienungsperson an dem abgeflachten Bereich 52 des Sockelteils 46 in der gezeigten Weise angreift. Wenn, wie es in den Figuren 2 - 4 gezeigt wird, der Boden 34 des Basisteils 32 einen Durchmesser aufweist, der größer ist als die Länge des Sockelteils 46, kann das Befestigungsmittel 44 sich seitlich bewegen, wenn es durch die Bedienungsperson betätigt wird. Wenn es gewünscht wird, kann der Durchmesser des Bodens 34 im wesentlichen gleich der Länge des Sockelteils 46 sein, so daß eine drehende und schwenkende Bewegung des Befestigungsmittels 44 möglich ist, während eine seitliche Bewegung mit Bezug auf den Boden 34 verhindert wird, Es würde jedoch eine gesteigerte Fertigungsgenauigkeit des Befestigungsmittels 44 und des Basisteils 32 benötigt werden, welche erhöhte Kosten repräsentieren würde. Unter einigen Umständen kann auch eine Kapazität für eine relative seitliche Bewegung des Befestigungsmittels 44 wünschenswert sein. In der in den Figuren 2 - 4 gezeigten Ausführungsform, kann das Befestigungsmittel 44 sich seitlich verschieben bis die Enden 56 des Sockelteils 46 mit einer Sehne gleicher Länge über den Boden 34 ausgerichtet sind (so daß die Enden 56 des Sockelteils 46 von einer weiteren seitlichen Bewegung durch das Zwischenstück 38 abgehalten werden), wonach das Befestigungsmittel 44 verschwenken wird, so daß das Haltemittel 48 angehoben wird. Der Umfang der Erweiterung bzw. des Haltemittels 48 ist kleiner als die Aussparung 28, so daß das Haltemittel 48 sich über die Ladefläche 20 erhebt.

Die Bedienungsperson kann das Befestigungsmittel 44 um eine Achse drehen, die sich durch den Mittelpunkt des Sockelteils 46 allgemein lotrecht zu dem abgeflachten Bereich 52 erstreckt. Eine drehende Ausrichtung des Befestigungsmittels 44 in Kombination mit einer Schwenkbewegung um den Sockelteil 46 erlaubt es dem Haltemittel 48, eine gewünschte Höhe zu erreichen (um das Haltemittel 48 beispielsweise zu dem nächsten Punkt, an dem ein Riemen gesichert ist, zu bringen).

Figur 4 zeigt eine perspektivische Ansicht der Verankerung 30, in der das Befestigungsmittel 44 durch eine zentrale Aussparung 66 der Verstärkungsplatte 64 und die Aussparung 28 in der Ladefläche 20 in eine angehobene, aufrechte Stellung verschwenkt wurde, um einen Riemen aufzunehmen. Wenn ein Riemen durch das Befestigungsmittel 44 aufgenommen wurde, wird eine Kraft, die an dem Befestigungsmittel 44 durch den Riemen angelegt wird (durch eine Verbindung zwischen dem Riemen und der Haltemittel 48) über den Sockelteil 46 an die Ladefläche 20 entweder durch direkten Kontakt oder durch die Verstärkungsplatte 64, wenn eine solche verwendet wird, übertragen.

In Übereinstimmung mit der vorangegangenen Beschreibung stellt die vorliegende Erfindung eine Verankerung 30 zur Verfügung welche einfach, kostengünstig, haltbar und zuverlässig ist. Das Anschlußmittel 32 und das Befestigungsmittel 44 repräsentieren eine einfache, zweiteilige Konstruktion. Da das Befestigungsmittel 44 zwischen der Ladefläche 20 und dem Boden 34 des Basisteils 32 eingeschlossen ist, ist keine Befestigung des Befestigungsmittels 44 an dem Boden 34 notwendig. Die Verankerung 30 kann daher günstig hergestellt und zusammengebaut werden.

In einer bevorzugten Ausführungsform der Verankerung 30, ist der Basisteil 32 unterhalb der Ladefläche 20 derart gesichert, daß der Boden 34 des Basisteils 32 unter die Ladefläche 20 zurückgesetzt ist. Wenn er nicht verwendet wird, kann das Befestigungsmittel 44 an dem Boden 34 anliegen, so daß kein Bereich des Befestigungsmittels 44 sich über die Ladefläche 20 erstreckt, so daß die Ladefläche 20 eine im wesentlichen ebenen Oberfläche zum Laden und Transportieren von Ladung zur Verfügung stellt. Eine Bedienungsperson kann das Befestigungsmittel 44 leicht in eine aufrechte Stellung schwenken, indem sie an dem abgeflachten Bereich 52 des Sockelteils 46 des Befestigungsmittels 44 mit einem einzelnen Finger angreift.

Vorzugsweise ist das Anschlußmittel 32 als ein einzelnes Teil aus einem Kunststoffverbundmaterial wie einem Polyäthylen als ein witterungsbeständiges Bauteil ausgebildet, welcher auch dazu dient Vibrationen und Lärm, wie sie mit einer zum Stand der Technik gehörenden Struktur verbunden sind, zu reduzieren. Eine in dem Boden 34 vorgesehene Abflußöffnung 40 verdrängt Feuchtigkeit und Schmutz.

Obwohl die Erfindung mit Bezug auf die dargestellte Ausführungsform beschrieben ist, sollte es für einen Fachmann deutlich sein, daß die Erfindung in der beschriebenen Form angepaßt an andere Anwendungsfälle vorteilhaft sein kann. Die vorliegende Erfindung sollte nicht durch die oben beschriebenen Ausführungsformen, sondern nur durch die folgenden Ansprüche begrenzt werden.

## Patentansprüche

1. Verankerung mit einem Basisteil (32) und einem Befestigungsmittel (44), wobei der Basisteil (32) eine Ausnehmung zur schwenkbaren Aufnahme des Befestigungsmittels (44) und das Befestigungsmittel (44) zumindest einen zylindrischen Sockelteil (46) und ein Haltemittel (48) aufweist, und der Basisteil (32) mit einer wenigstens eine Aussparung (28) aufweisenden Abdeckung verbunden ist und der Sockelteil (46) und das Haltemittel (48) derart dimensioniert sind, daß das Haltemittel (48) nicht aber der Sockelteil (46) durch die Aussparung (28) hindurchtreten kann, wobei das Befestigungsmittel (44) in verschiedene Stellungen und Höhen verschwenkbar und verdrehbar ist.

2. Verankerung nach einem oder mehreren der vorherigen Ansprüche, **dadurch gekennzeichnet, daß** das Befestigungsmittel (44) bezogen auf den Basisteil (34) zumindest in einem vorgegebenen Bereich verschieblich ist.

3. Verankerung nach einem oder mehreren der vorherigen Ansprüche, **gekennzeichnet durch** einen Anschlußflansch (36) über den der Basisteil (34) mit der Abdeckung verbindbar ist.

4. Verankerung nach Anspruch 3, **dadurch gekennzeichnet, daß** zwischen dem Anschlußflansch (36) und der Abdeckung eine Verstärkungsplatte (64) vorgesehen ist, die vorzugsweise eine Öffnung (66) von solcher Größe aufweist, daß das Haltemittel (48) nicht aber der Sockelteil (46) hindurchtreten kann.

5. Verankerung nach einem oder mehreren der vorherigen Ansprüche, **dadurch gekennzeichnet, daß** das Befestigungsmittel (44) bzw. das Haltemittel (48) zumindest bereichsweise in der Art einer Öse ausgebildet ist.

6. Verankerung nach einem oder mehreren der vorherigen Ansprüche, **dadurch gekennzeichnet, daß** die Abdeckung eine Ladefläche (20) oder mit einer solchen direkt oder indirekt verbunden ist.

7. Verankerung nach einem oder mehreren der vorherigen Ansprüche, **dadurch gekennzeichnet, daß** zumindest der Basisteil (32) aus einem Kunststoff vorzugsweise einem Kunststoffverbundmaterial besteht.

8. Verankerung nach einem oder mehreren der vorherigen Ansprüche, **dadurch gekennzeichnet, daß** der Basisteil (32) wenigstens eine Abflußöffnung (40) aufweist.

9. Fahrzeug (10), vorzugsweise mit wenigstens einer Ladefläche (20), mit zumindest einer Verankerung (30) nach einem oder mehreren der vorherigen Ansprüche.

## Claims

1. Tie-down having a base part (32) and an attachment means (44), the base part (32) having a recess for pivotable reception of the attachment means (44) and the attachment means (44) having at least one cylindrical bottom part (46) and a retaining means (48), and the base part (32) being connected to at least one cover which has an opening (28) and the bottom part (46) and the retaining means (48) being dimensioned in such a manner that the retaining means (48) but not the bottom part (46) can pass through the opening (28), the attachment means (44) being pivotable and rotatable into different positions and heights.

2. Tie-down according to one or more of the preceding claims, **characterised in that** the attachment means (44) is displaceable relative to the base part (34) at least in a prescribed region.

3. Tie-down according to one or more of the preceding claims, **characterised by** a connecting flange (36), via which the base part (34) is connectable to the cover.

4. Tie-down according to claim 3, **characterised in that** a reinforcing plate (64) is provided between the connecting flange (36) and the cover and has preferably an opening (66) of such a size that the retaining means (48) but not the bottom part (46) can pass through.

5. Tie-down according to one or more of the preceding claims, **characterised in that** the attachment means (44) or the retaining means (48) is configured at least in regions in the manner of an eye.

6. Tie-down according to one or more of the preceding claims, **characterised in that** the cover is a loading surface (20) or is connected directly or indirectly to such a one.

7. Tie-down according to one or more of the preceding claims, **characterised in that** at least the base part (32) comprises a plastic material, preferably a plastic composite material.

8. Tie-down according to one or more of the preceding claims, **characterised in that** the base part (32) has at least one outlet opening (40).

9. Vehicle (10), preferably having at least one loading surface (20), having at least one tie-down (30) according to one or more of the preceding claims.

## Revendications

1. Dispositif d'ancrage comportant une partie de base (32) et un moyen de fixation (44), la partie de base (32) étant munie d'un évidement destiné à recevoir de manière pivotante le moyen de fixation (44) et le moyen de fixation (44) étant muni au moins d'un socle (46) cylindrique et d'un moyen de retenue (48), et la partie de base (32) est assemblée à une surface de recouvrement comportant au moins un évidement (28), et le socle (46) et le moyen de retenue (48) sont dimensionnés de telle sorte que le moyen de retenue (48), mais pas le socle (46), peut passer à travers l'évidement (28), le moyen de fixation (44) étant apte à pivoter et à tourner dans différentes positions et hauteurs.

2. Dispositif d'ancrage selon une ou plusieurs des revendications précédentes, **caractérisé en ce que** le moyen de fixation (44) peut coulisser par rapport à la partie de base (34) au moins dans une zone prédéfinie.

3. Dispositif d'ancrage selon une ou plusieurs des revendications précédentes, **caractérisé par** une bride de raccordement (36), par laquelle la partie de base (34) peut être assemblée à la surface de recouvrement.

4. Dispositif d'ancrage selon la revendication 3, **caractérisé en ce que**, entre la bride de raccordement (36) et la surface de recouvrement, il est prévu une plaque de renfort (64), qui comporte de préférence un orifice (66) qui est dimensionné de telle sorte que le moyen de retenue (48), mais pas le socle (46), peut passer à travers ledit orifice.

5. Dispositif d'ancrage selon une ou plusieurs des revendications précédentes, **caractérisé en ce que** le moyen de fixation (44), plus précisément le moyen de retenue (48), au moins par zones, est réalisé en forme de boucle.

6. Dispositif d'ancrage selon une ou plusieurs des revendications précédentes, **caractérisé en ce que** la surface de recouvrement est une surface de chargement (20) ou est assemblée directement ou indirectement à une telle surface.

7. Dispositif d'ancrage selon une ou plusieurs des revendications précédentes, **caractérisé en ce qu'**au moins la partie de base (32) est réalisée en matière plastique, de préférence dans un matériau composite à base de matière plastique.

8. Dispositif d'ancrage selon une ou plusieurs des revendications précédentes, **caractérisé en ce que** la partie de base (32) comporte au moins un orifice d'évacuation (40).

9. Véhicule (10), de préférence avec au moins une surface de chargement (20), comportant au moins un dispositif d'ancrage (30) selon une ou plusieurs des revendications précédentes.
